# EUROPEAN PATENT SPECIFICATION

(11) **EP 3 859 600 B1**
(45) Date of publication and mention of the grant of the patent: **06.12.2023**
(21) Application number: 20184754.8
(22) Date of filing: 08.07.2020
(51) Int. Cl.: G06V 10/44, G06V 20/40, G06V 40/20

(54) **SYSTEM FOR SURVEYING SATISFACTION THROUGH MOTION RECOGNITION IN FIELD SPACE**
SYSTEM ZUR ERFASSUNG DER ZUFRIEDENHEIT DURCH BEWEGUNGSERKENNUNG IM FELDRAUM
SYSTÈME DE SURVEILLANCE DE SATISFACTION PAR RECONNAISSANCE DE MOUVEMENT DANS UN ESPACE DE CHAMP

(30) Priority: 03.02.2020 KR 20200012768
(43) Date of publication of application: 04.08.2021
(73) Proprietor: GN Company, Gangwon-do 198-52 (KR)
(72) Inventor: KIM, YOUNG GUN, Chuncheon-si Gangwon-do (KR); HAN, SEUNG SOO, Seocho-gu, Seoul (KR); LEE, SEUNG HONG, Chuncheon-si Gangwon-do (KR)
(74) Representative: Cohausz Hannig Borkowski Wißgott

(56) References cited:
- US-A1- 2019 163 965
- BRETHES L ET AL: "Face tracking and hand gesture recognition for human-robot interaction", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, 26 April 2004 (2004-04-26), page 1901, XP010768633, DOI: 10.1109/ROBOT.2004.1308101 ISBN: 978-0-7803-8232-9

## Description

### BACKGROUND OF THE INVENTION

### Field of the Invention

The present invention relates to a system for surveying satisfaction through motion recognition in a field space, in which when a viewer exiting from a viewing site space such as a tourist spot, an exhibition hall or the like expresses an evaluation as a motion such as a hand signal, a gesture or the like in front of an exit, the motion is captured and recognized using a video camera, and viewer's satisfaction is investigated and displayed on a display device in real-time.

Particularly, the present invention relates to a system for surveying satisfaction through motion recognition in a field space, which analyzes images of viewer's appearance captured by a video camera, extracts features of the viewer such as gender, age and the like, groups the viewer on the basis of the extracted features, and investigates satisfaction of each group.

### Background of the Related Art

Owing to improvement in the standard of living recently, the number of performances, exhibitions, and fairs being held is increasing, and the number of viewers also increases steadily. When a viewer selects a performance or an exhibition, the viewer usually determines whether or not to go through word of mouth or reviews of people who have finished the viewing.

Therefore, an organizer of a performance needs to survey satisfaction of viewers and provide a result thereof to attract more viewers and find future improvements. That is, a satisfaction survey for a viewing service is performed for a service provider (company, organization, individual, public institution, etc.) to secure competitive advantages through innovation or improvement in the viewing service by grasping satisfaction of service users.

In the past, satisfaction surveys are conducted by surveying viewers who have finished viewing. However, since participation of the viewers is poor, it is difficult to quantify a result of satisfaction. For example, a questionnaire is provided at a viewing site, and viewers are asked to fill out the questionnaire. In this case, the participation rate of the viewers in the survey is considerably low since time or the like is wasted due to the manual survey. Therefore, it is difficult to conduct a complete enumeration survey on satisfaction by a manual work using papers or the like.

In addition, the surveys may be conducted by requesting an institution specializing in satisfaction survey. In this case, in order to measure satisfaction of a service that is to be surveyed, various survey items are selected and satisfaction thereof is investigated. In particular, it is possible to hire surveyors and conduct face-to-face surveys. However, there is a problem in that a considerable amount of money is required to use a specialized institution, and people avoid face-to-face interviews in the era of COVID-19. Even in this case, a complete enumeration survey is difficult due to the cost.

In addition, the satisfaction survey according to the prior art as described above may not collect or monitor the results in real time. That is, a final analysis result may be confirmed only after a series of troublesome processes, such as inputting a result of survey conducted using a questionnaire or a result of survey conducted by a surveyor into a computer according to a separate procedure, collecting input data, and analyzing satisfaction.

In order to solve the problems described above, a technique of surveying satisfaction online has been proposed [Patent Document 1]. Particularly, a technique of providing motivation by giving an incentive for satisfaction survey has been proposed [Patent Document 2]. However, the above prior arts are difficult to apply in the field such as a tourist spot, an exhibition hall, or the like since the customers should access and fill out a questionnaire online.

In addition, a technique of surveying satisfaction of viewing through facial expressions of a visitor has been proposed [Patent Document 3]. However, the facial expressions vary from person to person, and more often than not, a facial expression does not match a satisfaction level according to personal preference. That is, analyzing a satisfaction level with only facial expressions is very difficult in reality.

US 2019/163965 A1 (YOO DAE-HUN [KR] ET AL) 30 May 2019 (2019-05-30) discloses a system for determining the emotion and satisfaction of a person by using images.

### [Patent Documents]

(Patent Document 1) Korean Laid-opened Patent No. 10-2012-0098149 (disclosed on September 05, 2012)
(Patent Document 2) Korean Laid-opened Patent No. 10-2015-0114604 (disclosed on October 13, 2015)
(Patent Document 3) Korean Laid-opened Patent No. 10-2015-0033173 (disclosed on April 01, 2015)
(Patent Document 4) Korean Patent Registration No. 10-1748579 (disclosed on June 19, 2017)
(Patent Document 5) Korean Patent Registration No. 10-1865253 (disclosed on May 31, 2018)

### SUMMARY OF THE INVENTION

Accordingly, the present invention has been made in view of the above-mentioned problems occurring in the prior art, and it is an object of the present invention to provide a system for surveying satisfaction through motion recognition in a field space, in which when a viewer exiting from a viewing site space expresses an evaluation as a motion such as a hand signal, a gesture or the like in front of an exit, the motion is captured and recognized using a video camera, and viewer's satisfaction is investigated.

It is another object of the present invention to provide a system for surveying satisfaction through motion recognition in a field space, which analyzes images of viewer's appearance captured by a video camera, extracts features of the viewer such as gender, age and the like, groups the viewer on the basis of the extracted features, and investigates satisfaction of each group.

It is still another object of the present invention to provide a system for surveying satisfaction through motion recognition in a field space, which acquires a video of a viewer only when a motion signal is recognized from an image captured using a video camera, and analyzes features of the viewer from a corresponding video of the viewer.

The invention is defined by the appended set of claims.

### BRIEF DESCRIPTION OF THE DRAWINGS

FIG. 1 is a block diagram showing the configuration of an entire system for embodying the present invention.
FIGS. 2 and 3 are exemplary views showing a state of installing a camera device and a display device according to an embodiment of the present invention.
FIG. 4 is a block diagram showing the configuration of a system for surveying satisfaction through motion recognition in a field space according to an embodiment of the present invention.
FIG. 5 is an exemplary view illustrating grouping of cameras installed at a passage gate of a viewing space configured of subregions according to an embodiment of the present invention.
FIG. 6 is a view showing hand signals expressed by fingers according to an embodiment of the present invention.
FIG. 7 is a table showing the correspondence relation between motion signals of hand signals and satisfaction levels according to an embodiment of the present invention.
FIG. 8 is a table showing the correspondence relation matching event attributes corresponding to a shooting time according to an embodiment of the present invention.
FIG. 9 is an exemplary view showing a guide video according to an embodiment of the present invention.

### DESCRIPTION OF SYMBOLS

10: Camera device
20: Display device
30: Survey server
31: Video acquisition unit
32: Satisfaction extraction unit
33: Attribute extraction unit
34: Statistics analysis unit
35: Result output unit
36: Guide unit
40: Database
60: Smart terminal
80: Network

### DETAILED DESCRIPTION OF THE PREFERRED EMBODIMENT

Hereinafter, specific contents for embodying the present invention will be described in accordance with the drawings.

In addition, in describing the present invention, like elements are denoted by like reference numerals, and repeated descriptions thereof are omitted.

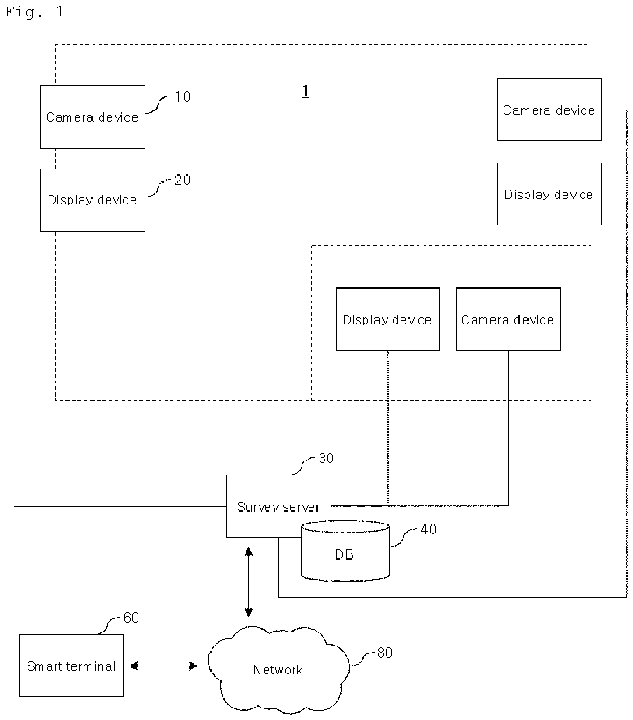

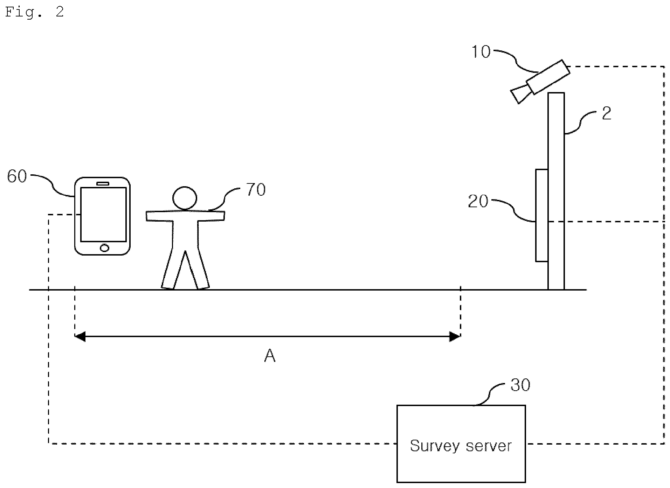

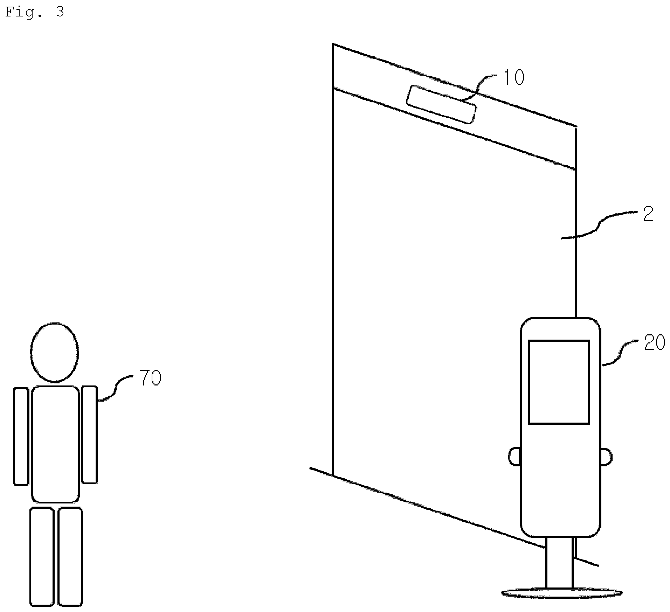

First, the configuration of an entire system according to a first embodiment of the present invention will be described with reference to FIGS. 1 to 3.

As shown in FIGS. 1 to 3, the entire system according to an embodiment of the present invention includes a camera device 10 configured of a video camera, a display device 20 configured of a display such as a monitor or the like, and an analysis server 30 that receives an image of a viewer from the camera device 10 and investigates a satisfaction level. Additionally, the system may be configured to further include a database 40 for storing needed data, or a smart terminal 60 used by a manager, a viewer or the like. In addition, the smart terminal 60 and the analysis server 30 perform data communication through a network 80.

First, at least one passage gate 2 is formed in a viewing space 1, and the camera device 10 and the display device 20 are installed at each passage gate 2.

The viewing space 1 is a space set as a predetermined region such as an exhibition hall, a fairground, an event hall, a festival hall, an amusement park, a cafe, a restaurant or the like, and the passage gate 2 refers to a connection path or the like between a plurality of entrances, exits, passages, or regions in the viewing space 1. For example, an exit or an entrance through which viewers exit may be formed in the viewing space 1 such as an exhibition hall or the like, and such an exit or entrance forms a passage gate 2. In addition, the viewing space 1 of an exhibition hall is partitioned into a plurality of regions, and each region is assigned with a predetermined area, and when a viewer moves from one region to another region, a connection path for moving between the regions may be formed. This connection path may also form a passage gate 2.

Next, the camera device 10 is configured of a video camera for capturing the viewer 70 and is installed in the viewing space 1. Preferably, the camera device 10 is installed on the top of the passage gate 2, such as a connection path between entrances, passages, or regions, and captures images of people or viewers approaching the passage gate 2.

In addition, the camera device 10 is connected to the survey server 30 through a network (not shown), and transmits acquired images of the viewer to the survey server 30. At this time, preferably, the camera device 10 also transmits data about the shooting time or shooting place (region).

In addition, the camera device 10 may detect a viewer through a human body sensor or through an analysis of a captured video, and capture and transmit a video when a viewer is detected.

In addition, the camera device 10 is provided with a human body sensor (not shown) or the like to detect that the viewer 70 is positioned within a display section A, and may capture and acquire images of the viewer by driving the video camera only when the viewer is detected by the human body sensor (i.e., within the display section).

In addition, the camera device 10 is fixed so that the video camera may capture a viewer within the display section A, and transmits corresponding videos to the survey server 30 only when a motion is captured by continuously acquiring videos using the video camera.

Next, the display device 20 is configured of a display such as a monitor or the like, and outputs satisfaction survey guide information or survey result information to the display. In addition, the display device 20 is also connected to the survey server 30 through a network (not shown), and performs data communication with the survey server 30. Particularly, the display device 20 is controlled by the survey server 30, receives display information from the survey server 30, and displays the received display information on the display.

In addition, the display device 20 receives a guide video of a satisfaction survey method from the survey server 30, and output or repeatedly output the received guide video. Particularly, the display device 20 preferably outputs the guide video when a viewer is detected in association with the camera device 10.

Meanwhile, preferably, the camera device 10 and the display device 20 are configured as one set and installed at the same passage gate 2. In addition, the camera device 10 and the display device 20 may communicate with the survey server 30 through the same network (not shown). At this point, the network (not shown) may be constructed as a short-range wireless communication network such as Wi-Fi or the like.

In addition, when the viewing space 1 has a plurality of exits or is partitioned into a plurality of regions, the camera device 10 and the display device 20 configured as a set may be installed at a plurality of locations (or passage gates) of the viewing space 1.

Next, the survey server 30 is installed in a place where a manager may monitor the overall space, regardless of places such as inside or outside the viewing space 1. In addition, the survey server 30 is a device having a computing process function such as a personal computer (PC), a server device or the like, and is connected to the camera device 10 and the display device 20 through a wired or wireless network. Particularly, the survey server 30 may be a server installed in a central control center, a central control room or the like.

In addition, the survey server 30 receives and collects videos of viewers captured by the camera device 10. In addition, the survey server 30 may control the camera device 10 by transmitting a control command. In addition, the survey server 30 may transmit display information or a display information video to the display device 10 to control the display device 10 to output the display information. At this point, the survey server 30 transmits a control command and display data to the display device 10.

The survey server 30 detects a viewer's motion signal such as a hand signal, a hand motion, an arm motion or the like from the video of the viewer, and extracts a satisfaction level (or satisfaction data) corresponding to the detected motion signal.

In addition, the survey server 30 estimates features (or attributes) of the viewer from the video in which the motion signal is detected. That is, the survey server 30 estimates features (or attributes) of the viewer, such as the gender, age and the like of the viewer from the video of the viewer, and sets the estimated features as the attributes (or attribute values) of a corresponding satisfaction level. The attributes of the satisfaction level refer to features of the viewer (or attributes of the viewer) of the corresponding satisfaction level.

In addition, the survey server 30 sets the time and place (location) where the video of the viewer is captured as measurement attributes of the corresponding satisfaction level. That is, the measurement attributes of the satisfaction level include a time zone, a region, and the like.

In addition, the survey server 30 analyzes satisfaction using satisfaction data, attributes of corresponding satisfaction, or the like.

In addition, the survey server 30 transmits a result of analyzing the satisfaction to the display device 20 or the smart terminal 60.

Next, the smart terminal 60 is a mobile terminal used by a manager or a viewer, which is a mobile terminal equipped with general computing functions, such as a smartphone, a phablet, a tablet PC or the like.

The smart terminal 60 accesses the survey server 30 and uses a satisfaction analysis service provided by the survey server 30. The satisfaction analysis service is a service of viewing statistical information such as overall satisfaction, satisfaction grouped by attribute, or the like. At this point, a user may selectively view the satisfaction for each attribute.

Next, the database 40 may be configured of a survey data DB 41 for storing individual satisfaction data, and an analysis result DB 42 for storing a result of analyzing satisfaction using surveyed satisfaction data. However, the configuration of the database 40 is only a preferred embodiment, and in developing a specific device, it may be configured in a different structure according to a database construction theory, considering ease and efficiency of access and search.

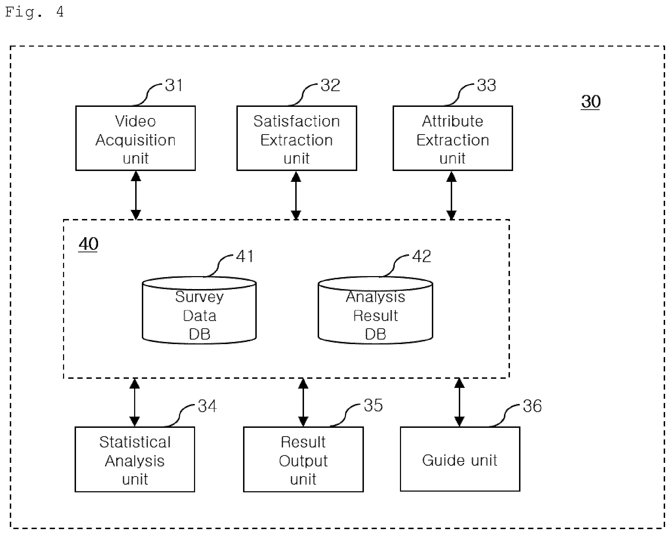

Next, the configuration of the system for surveying satisfaction through motion recognition in a field space according to a first embodiment of the present invention will be described in more detail with reference to FIG. 4. The satisfaction survey system according to the present invention may be implemented as a server that provides survey services, like the survey server 30 described above.

As shown in FIG. 4, the system for surveying satisfaction 30 through motion recognition in a field space according to an embodiment of the present invention includes a video acquisition unit 31 for acquiring a video of a viewer captured using a camera, a satisfaction extraction unit 32 for extracting a satisfaction level from the video, an attribute extraction unit 33 for extracting attributes of satisfaction data, and a statistical analysis unit 34 for statistically analyzing the satisfaction data. In addition, additionally, the satisfaction survey system 30 may further include a result output unit 35 for outputting an analysis result, or a guide unit 36 for outputting a guide video for satisfaction survey.

First, the video acquisition unit 31 receives and acquires a video of a viewer captured by the camera device 10. At this point, preferably, shooting information related to the shooting time and shooting place (or region information) of the acquired video is received together.

The camera device 10 may be installed in a plurality of locations. At this point, each of the cameras may be grouped by region. That is, a plurality of exits or passage gates 2 may be formed in a region, and in this case, when the passage gates 2 are in the same region, the cameras in the same region are set as the same group.

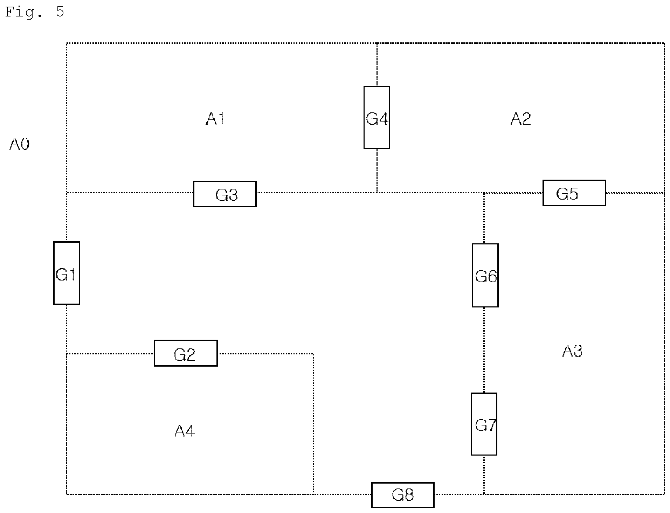

In the example of FIG. 5, the entire region is referred to as A0, and the entire region A0 is divided into subregions A1, A2, A3 and A4. At this point, a satisfaction survey corresponding to the entire region A0 is conducted at exits G1 and G8. In addition, a satisfaction survey for subregion A1 is conducted at exits G3 and G4. In addition, a satisfaction survey for subregion A3 is conducted at exits G5, G6 and G7, and a satisfaction survey for subregion A4 is conducted at G2. At this point, two camera devices 10 are installed on each of both sides of the exit or passage gate 2 formed between two neighboring subregions. For example, two camera devices 10 are installed at exits G4 and G5 in both directions, respectively.

Next, the satisfaction extraction unit 32 detects a motion signal by recognizing a motion of a viewer from a video of the viewer, and extracts a satisfaction level corresponding to the detected motion signal.

The viewer's motion includes a hand signal expressed by a finger, a specific motion of a hand, a motion of an arm, a motion of the lips, and the like. The motion signal by the viewer's motion and a satisfaction level corresponding to each motion signal are set in advance.

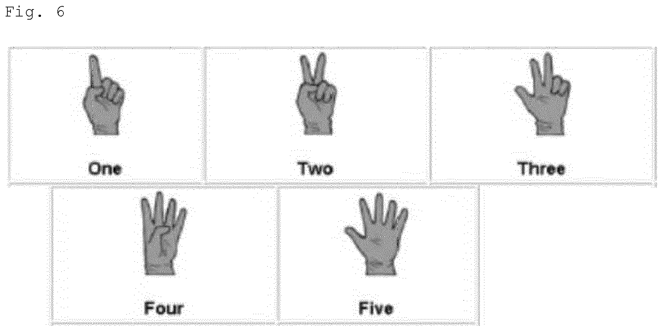

As shown in FIG. 6, the viewer's motion is a hand signal expressed by a finger. Hereinafter, it will be described as a motion signal by a hand signal.

A well-known technique [Patent Document 4] is applied as a method of recognizing a hand signal motion from a video of a viewer. A detailed description thereof will be omitted.

As the hand signal motion, motion signals 1 to 5 are set by the number of spread fingers. The correspondence relationship between the hand signal motion (or motion signal) and a satisfaction level corresponding thereto is set in advance. The satisfaction level is expressed by the number of spread fingers.

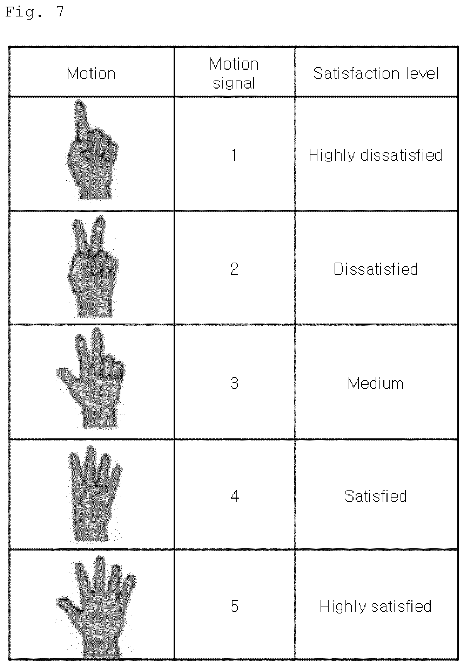

The correspondence relationship between the hand signal and the satisfaction level is shown in FIG. 7. That is, when one finger is spread, the satisfaction level is "very dissatisfied", and when two fingers are spread, the satisfaction level is "dissatisfied." In addition, four and five fingers correspond to the satisfaction levels of "satisfied" and "very satisfied", respectively.

Next, the attribute extraction unit 33 extracts attribute values (or attributes of the viewer) using a video of the viewer or shooting information of the video of the viewer, and sets the attributes of the satisfaction data of a corresponding video of the viewer as attribute values of the corresponding viewer.

Particularly, the attribute extraction unit 33 extracts attributes of the viewer only from a video of the viewer from which a motion signal is detected (or a video of the viewer from which a satisfaction level is extracted). That is, video of the viewers from which a motion signal is not detected are excluded.

The attribute extraction unit 33 extracts features (or attributes) of the viewer by analyzing the viewer's head, face, height, clothing, or the like from the video of the viewer. Particularly, the attribute extraction unit 33 may utilize a conventional technique of extracting features of a viewer on the basis of a neural network.

The attribute extraction unit 33 extracts the viewer's face from the video of the viewer, and extracts viewer's age and gender from the image of the viewer's face. The method of extracting the viewer's age and gender from the face image is a well-known technique [Patent Document 5]. Therefore, detailed description thereof is omitted.

The extracted attribute values such as the age and gender are set as attributes of satisfaction data. That is, the age and gender (attribute values) extracted from a corresponding video of the viewer are set as attributes of satisfaction data extracted from the same video. At this point, the age may be set as a group according to a predetermined age group. For example, the age group may be defined by attributes classified as children, adolescents, adults, and seniors. Each attribute will be referred to as an age attribute and a gender attribute of a satisfaction level.

In addition, the attribute extraction unit 33 sets measurement attributes of satisfaction data according to a shooting time and a shooting place (or region information) of a corresponding video of the viewer. That is, the shooting time and region of a video of a corresponding viewer are set as attributes of the satisfaction data extracted from the same video. Each attribute will be referred to as a time attribute and a region attribute of a satisfaction level.

In addition, the attribute extraction unit 33 may set an event attribute using a time attribute. That is, when a specific event is performed in the same region, the event may be determined as an attribute at a time zone in which the event is performed.

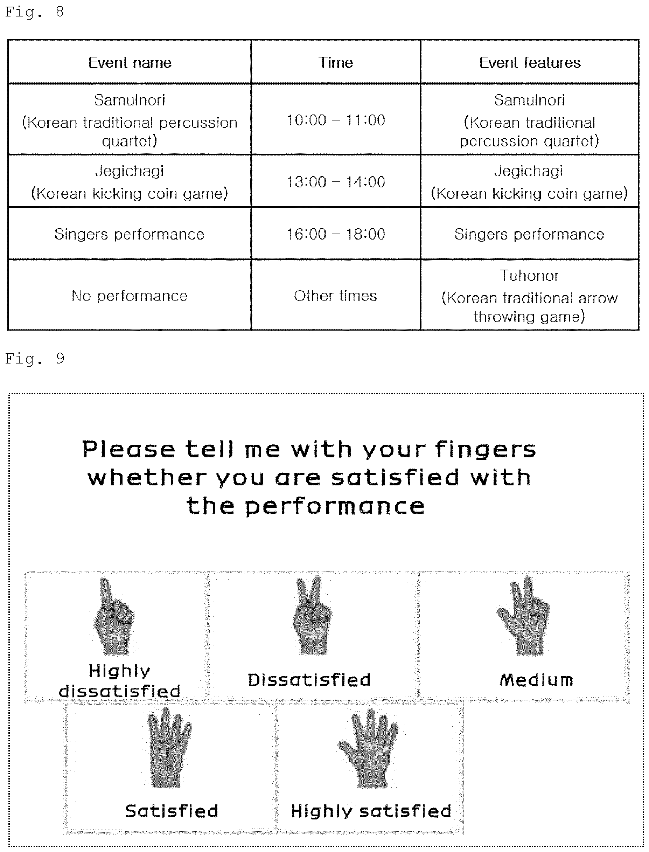

Meanwhile, when a specific event is performed at a specific time zone, the event attribute may be set using a shooting time. As shown in FIG. 8, when various events are performed in the same place or region, satisfaction survey at the time zone may be subdivided into a satisfaction level of the event. When there is no special event, the event attribute may be set by the rides placed at the location.

Next, the statistical analysis unit 34 calculates statistical values such as a sum, an average and the like of extracted satisfaction data. Particularly, the statistical values are preferably calculated for each attribute.

In addition, the statistical analysis unit 34 calculates the statistical values as a table or a graph.

Statistical data on various types of satisfaction (or an average of satisfaction) or tables and graphs of corresponding statistical data may be generated by combination of attributes, for example, an average of satisfaction of each region, an average of satisfaction of each gender, an average of satisfaction of each age group, an average of satisfaction of each time zone, an average of satisfaction of each region and gender, an average of satisfaction of each region, gender, and age group, and the like.

Preferably, the statistical analysis unit 34 generates real-time statistical data by calculating statistical values whenever new satisfaction data is received.

Next, the result output unit 35 transmits numerical data or table or graph data (hereinafter, statistical data) of the calculated satisfaction statistical values to the display device 20.

Alternatively, the result output unit 35 generates satisfaction statistical data in the form of a web page or a mobile page, and transmits the generated page in response to the request of the smart terminal 60.

Particularly, the result output unit 35 generates and transmits real-time statistical data. Accordingly, each viewer may know in real-time the regions, events or the like of high satisfaction, and may visit popular regions. In addition, the viewer may visit a region that a group of the viewer's age or gender prefers.

Next, the guide unit 36 generates a video that guides a satisfaction survey method, such as details of motion signals, and transmits the generated guide video to the display device 20. An example of the guide video is shown in FIG. 9. The guide video may be generated as a video showing the method demonstrated by a guide person.

The display device 20 may output the guide video repeatedly and automatically or output the guide video when a viewer is detected in association with the camera device 10.

Next, the configuration of a system for surveying satisfaction through motion recognition in a field space according to a second embodiment of the present invention will be described in detail.

The configuration of the second embodiment of the present invention is the same as that of the first embodiment described above. However, in the second embodiment of the present invention, the camera device 10 and the survey server 30 are configured as one system.

Specifically, some of the functions of the video acquisition unit 31 and the satisfaction extraction unit 32 of the first embodiment may be implemented in the camera device 10. That is, the camera device 10 captures a video of a viewer, and transmits a corresponding video of the viewer and shooting information to the survey server 30 only when a motion signal (predetermined motion signal) is detected from the captured video of the viewer.

As described above, according to the system for surveying satisfaction through motion recognition in a field space, as a viewer expresses a satisfaction level by a simple body motion at an exit and the body motion is recognized and analyzed, an effect of saving time and money required for the satisfaction survey and increasing viewer's participation can be obtained.

In addition, according to the system for surveying satisfaction through motion recognition in a field space, as viewers are grouped by the appearance features such as gender, age and the like from images of viewer's appearance acquired by a video camera, an effect of more precisely analyzing satisfaction can be obtained by subdividing the satisfaction into groups without asking additional personal information or the like.

In addition, according to the system for surveying satisfaction through motion recognition in a field space, as a video of a viewer is acquired only when a motion signal is recognized from an image captured using a video camera, and features of the viewer are analyzed from a corresponding video of the viewer, an effect of reducing the amount of computation and improving computation speed is obtained.

In addition, an effect of high participation rate is obtained by a non-contact survey method in the era of COVID-19.

## Claims

1. A system for surveying satisfaction through motion recognition in a field space, the system being connected to at least a camera device and a display device installed at an exit of a viewing space, and comprising:
a guide unit for transmitting a guide video showing a predefined correspondence relationship between motion signals and satisfaction levels to the display device;
a video acquisition unit for acquiring a video of a viewer captured using the camera device;
a satisfaction extraction unit for detecting a motion signal by recognizing a motion of the viewer from the video of the viewer, and extracting a satisfaction level corresponding to the detected motion signal;
an attribute extraction unit for extracting attribute values from the video of the viewer, and setting the extracted attribute values as attributes of the extracted satisfaction level;
and a statistical analysis unit for calculating statistical values by statistically analyzing data on the satisfaction level, for each attribute combination by combining the attributes,
wherein the attribute extraction unit extracts the attribute values only for a video of the viewer from which a satisfaction level is extracted,
the attribute extraction unit extracts viewer's face from the video of the viewer, extracts viewer's age and/or gender from an image of the viewer's face, and sets attribute values of the extracted age and gender as an age attribute and a gender attribute of the extracted satisfaction level, and,
the viewer's motion is a hand signal expressed by a finger, the motion signal is distinguished by the number of spread fingers, and the satisfaction level is expressed by the number of spread fingers.

2. The system according to claim 1, wherein the viewing space is configured of a plurality of regions, the camera device is installed at one or more exits of the entire viewing space and at one or more exits of each region, and wherein a shooting information being received together with the video includes region information, and the attribute extraction unit sets the region information as an attribute.

3. The system according to claim 1, wherein when different events are performed in the same region according to time zones, the attribute extraction unit sets an event attribute of the satisfaction level using a shooting time of a shooting information being received together with the video, and sets a corresponding event as an attribute value of the event attribute when the shooting time belongs to a time zone of the corresponding event.

4. The system according to claim 1, wherein the statistical analysis unit calculates statistical values of a satisfaction level for each combined attribute by combining the attributes.

5. The system according to claim 1, wherein the statistical analysis unit generate real-time statistical data by recalculating the statistical values whenever new satisfaction data is received.

6. The system according to claim 1, wherein the display device outputs the guide video only when the viewer is detected in association with the camera device.

## Patentansprüche

1. System zum Erfassen von Zufriedenheit durch Bewegungserkennung in einem Feldraum, wobei das System mit mindestens einer Kameravorrichtung und einer Anzeigevorrichtung verbunden ist, die an einem Ausgang eines Betrachtungsraums installiert sind, und umfassend:
eine Führungseinheit zum Übertragen eines Führungsvideos, das eine vordefinierte Entsprechungsbeziehung zwischen Bewegungssignalen und Zufriedenheitsniveaus zeigt, an die Anzeigevorrichtung;
eine Videoerfassungseinheit zum Erfassen eines Videos eines Betrachters, das mit der Kameravorrichtung aufgenommen wird;
eine Zufriedenheitsextraktionseinheit zum Erfassen eines Bewegungssignals durch Erkennen einer Bewegung des Betrachters aus dem Video des Betrachters und Extrahieren eines Zufriedenheitsniveaus entsprechend dem erfassten Bewegungssignal;
eine Attributextraktionseinheit zum Extrahieren von Attributwerten aus dem Video des Betrachters und zum Festlegen der extrahierten Attributwerte als Attribute des extrahierten Zufriedenheitsniveaus;
und eine Einheit zur statistischen Analyse zum Berechnen von statistischen Werten durch statistisches Analysieren von Daten über das Zufriedenheitsniveau für jede Attributkombination durch Kombinieren der Attribute,
wobei die Attributextraktionseinheit die Attributwerte nur für ein Video des Betrachters extrahiert, aus dem ein Zufriedenheitsniveau extrahiert wird,
die Attributextraktionseinheit das Gesicht des Betrachters aus dem Video des Betrachters extrahiert, das Alter und/oder das Geschlecht des Betrachters aus einem Bild des Gesichts des Betrachters extrahiert und Attributwerte des extrahierten Alters und des extrahierten Geschlechts als ein Altersattribut und ein Geschlechtsattribut des extrahierten Zufriedenheitsniveaus festlegt, und,
die Bewegung des Betrachters ein Handzeichen ist, das durch einen Finger ausgedrückt wird, das Bewegungssignal durch die Anzahl der gespreizten Finger unterschieden wird, und das Zufriedenheitsniveau durch die Anzahl der gespreizten Finger ausgedrückt wird.

2. System nach Anspruch 1, wobei der Betrachtungsraum mit einer Vielzahl von Bereichen ausgelegt ist, die Kameravorrichtung an einem oder mehreren Ausgängen des gesamten Betrachtungsraums und an einem oder mehreren Ausgängen jedes Bereichs installiert ist, und wobei eine Aufnahmeinformation, die zusammen mit dem Video empfangen wird, Bereichsinformationen beinhaltet, und die Attributextraktionseinheit die Bereichsinformationen als ein Attribut festlegt.

3. System nach Anspruch 1, wobei, wenn verschiedene Veranstaltungen im gleichen Bereich gemäß Zeitzonen durchgeführt werden, die Attributextraktionseinheit ein Veranstaltungsattribut des Zufriedenheitsniveaus unter Verwendung einer Aufnahmezeit einer Aufnahmeinformation, die zusammen mit dem Video empfangen wird, festlegt, und eine entsprechende Veranstaltung als einen Attributwert des Veranstaltungsattributs festlegt, wenn die Aufnahmezeit zu einer Zeitzone der entsprechenden Veranstaltung gehört.

4. System nach Anspruch 1, wobei die Einheit zur statistischen Analyse statistische Werte eines Zufriedenheitsniveaus für jedes kombinierte Attribut durch Kombinieren der Attribute berechnet.

5. System nach Anspruch 1, wobei die Einheit zur statistischen Analyse statistische Daten in Echtzeit erzeugt, indem sie die statistischen Werte immer dann neu berechnet, wenn neue Zufriedenheitsdaten empfangen werden.

6. System nach Anspruch 1, wobei die Anzeigevorrichtung das Führungsvideo nur dann ausgibt, wenn der Betrachter in Verbindung mit der Kameravorrichtung erkannt wird.

## Revendications

1. Système de surveillance de satisfaction par reconnaissance de mouvement dans un espace de champ, le système étant connecté à au moins un dispositif de caméra et un dispositif d'affichage installés à une sortie d'un espace de visualisation, et comprenant :
une unité de guidage destinée à transmettre une vidéo de guidage montrant une relation de correspondance prédéfinie entre des signaux de mouvement et des niveaux de satisfaction au dispositif d'affichage ;
une unité d'acquisition vidéo destinée à acquérir une vidéo d'un spectateur capturée à l'aide du dispositif de caméra ;
une unité d'extraction de satisfaction destinée à détecter un signal de mouvement en reconnaissant un mouvement du spectateur à partir de la vidéo du spectateur, et extraire un niveau de satisfaction correspondant au signal de mouvement détecté ;
une unité d'extraction d'attributs destinée à extraire des valeurs d'attributs à partir de la vidéo du spectateur et établir les valeurs d'attributs extraites en tant qu'attributs du niveau de satisfaction extrait ;
et une unité d'analyse statistique destinée à calculer des valeurs statistiques en analysant statistiquement des données sur le niveau de satisfaction, pour chaque combinaison d'attributs en combinant les attributs,
dans lequel l'unité d'extraction d'attributs extrait les valeurs d'attributs uniquement pour une vidéo du spectateur à partir de laquelle un niveau de satisfaction est extrait,
l'unité d'extraction d'attributs extrait un visage de spectateur à partir de la vidéo du spectateur, extrait l'âge et/ou le genre du spectateur à partir d'une image du visage du spectateur et établit des valeurs d'attributs de l'âge et du genre extraits en tant qu'attribut d'âge et d'attribut de genre du niveau de satisfaction extrait, et,
le mouvement du spectateur est un signal de la main exprimé par un doigt, le signal de mouvement est différencié par le nombre de doigts écartés et le niveau de satisfaction est exprimé par le nombre de doigts écartés.

2. Système selon la revendication 1, dans lequel l'espace de visualisation est configuré en une pluralité de régions, le dispositif de caméra est installé à une ou plusieurs sorties de l'ensemble de l'espace de visualisation et à une ou plusieurs sorties de chaque région, et dans lequel des informations de prise de vue reçues en même temps que la vidéo comprennent des informations de région, et l'unité d'extraction d'attributs établit les informations de région en tant qu'attribut.

3. Système selon la revendication 1, dans lequel, lorsque différents événements sont réalisés dans la même région conformément à des fuseaux horaires, l'unité d'extraction d'attributs établit un attribut d'événement du niveau de satisfaction à l'aide d'une heure de prise de vue d'informations de prise de vue reçues en même temps que la vidéo, et établit un événement correspondant comme valeur d'attribut de l'attribut d'événement lorsque l'heure de prise de vue appartient à un fuseau horaire de l'événement correspondant.

4. Système selon la revendication 1, dans lequel l'unité d'analyse statistique calcule des valeurs statistiques d'un niveau de satisfaction pour chaque attribut combiné en combinant les attributs.

5. Système selon la revendication 1, dans lequel l'unité d'analyse statistique génère des données statistiques en temps réel en recalculant les valeurs statistiques chaque fois que de nouvelles données de satisfaction sont reçues.

6. Système selon la revendication 1, dans lequel le dispositif d'affichage ne délivre la vidéo de guidage que lorsque le spectateur est détecté en association avec le dispositif de caméra.
